# EUROPÄISCHE PATENTSCHRIFT

(11) **EP 0 385 152 B1**
(45) Veröffentlichungstag und Bekanntmachung des Hinweises auf die Patenterteilung: **28.12.1994**
(21) Anmeldenummer: 90102462.0
(22) Anmeldetag: 08.02.1990
(51) Int. Cl.: B23D 19/02

(54) **Schneidvorrichtung für Blechbänder**
Cutting device for sheet metal strip
Dispositif de coupe pour feuillards de tôle

(30) Priorität: 01.03.1989 DE 8902387 U
(43) Veröffentlichungstag der Anmeldung: 05.09.1990
(73) Patentinhaber: Richter, Alfred, D-75365 Calw (DE)
(72) Erfinder: Richter, Alfred, D-75365 Calw (DE)
(74) Vertreter: Hubbuch, Helmut, Dipl.-Ing

(56) Entgegenhaltungen:
- DE-A- 3 145 820
- DE-U- 8 902 387
- US-A- 3 659 487
- US-A- 4 161 974
- US-A- 4 640 326
- US-A- 4 745 834

## Beschreibung

Die Erfindung bezieht sich auf eine Schneidvorrichtung für Blechbänder bestehend aus einem Arbeitstisch mit einerseits quer zur Bandeingabe verschiebbar angeordneten Schneidmessern bzw. -Rollen.

In Blechnereien werden vorallem für Blecharbeiten am Bau Blechwickel verschiedener Breite auf sogen. Abrollwagen auf Lager gehalten, um von diesen jeweils entsprechende Blechlängen abschneiden zu können. Dies wird von Hand mittels Blechschere oder bei umfangreicheren Blecharbeiten mittels teuren Ablängmaschinen gemacht; letztere eignen sich schon allein vom Anschaffungswert her mehr für den maschinellen Blechzuschnitt in grösseren Werkstätten oder Fabriken, wobei für kontinuierliche Blechzuschnitte , z.B. für Automobile sogen. fliegende Scheren zum Einsatz kommen.

Durch die US-A- 3 659 487 ist eine Schneidvorrichtung für aufgewickeltes, bandförmiges Material bestehend aus einem Arbeitstisch mit einerseits quer zur Bandeinlage verschiebbar angeordneten Schneidmessern bzw. Rollen bekannt, wobei der Arbeitstisch auf wenigstens zwei im Abstand voneinander angeordneten, vorzugsweise mit Fahrrollen versehenen Standfüßen angeordnet ist.

Nachteilig bei dieser Schneidvorrichtung ist, daß diese relativ viel Platz benötigt.

Durch die DE 31 45 820 A1 ist ein Montagetisch zur Aufnahme flächenförmiger Werkstücke bekannt. Der Montagetisch ist auf einem fahrbarem Gestell mittels einer Schwenkvorrichtung um eine horizontale Achse verschwenkbar und in dieser feststellbar.

Hiervorn ausgehend liegt der Erfindung die Aufgabe zugrunde die bekannte Schneidvorrichtung so weiterzubilden, daß diese einerseits einen halbmaschinellen Blechzuschnitt ermöglicht und andererseits auch bei Nichtgebrauch leicht wegzustellen ist.

Diese Aufgabe wird durch die Merkmale des Anspruchs 1 gelöst. Vorteilhafte Weiterbildungen sind Gegenstand der Unteransprüche.

Die erfindungsgemäße Schneidvorrichtung zeichnet sich dadurch aus, daß der Arbeitstisch halbierbar ist. Der halbbierbare Arbeitstisch ist an seinem Außenrahmen zusammensteckbar und mittels unteren Gelenkstützen an den Standfüßen verschwenkbar festlegbar, trennt die Wand der Standfüße in Ü-Form mit einteck- oder anflanschbarer Längstraverse fest verbind- bzw. verschraubbar sind.

Ein bevorzugtes Ausführungsbeispiel einer Schneidvorrichtung gemäss der Erfindung ist beispielsweise in der Zeichnung dargestellt und zwar zeigen:

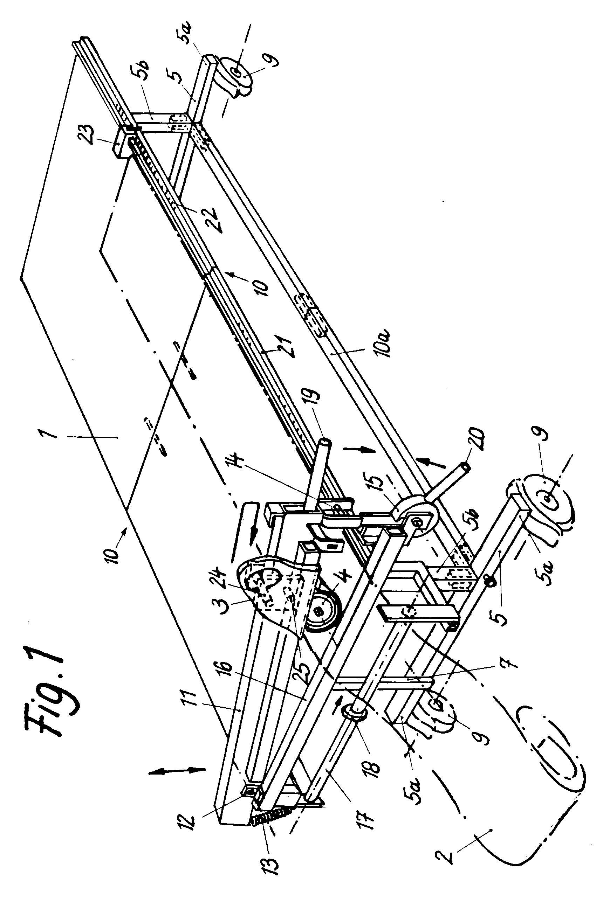

- Figur 1: die perspektivische Ansicht der Schneidvorrichtung mit Tischebene beim Arbeiten,

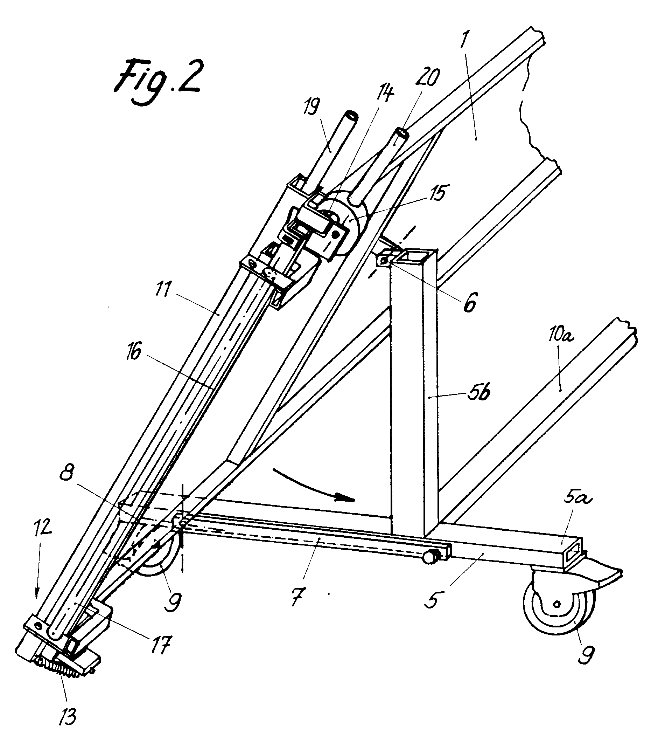

- Figur 2: die perspektivische Ansicht der Schneidvorrichtung mit hochgestelltem Tisch beim Wegstellen.

Wie aus der Zeichnung ersichtlich wird, besteht die erfindungsgemässe Schneidvorrichtung aus einem Arbeitstisch 1 und quer zur Bandeingabe 2 verschiebbar angeordnetem Schneidwagen 3 mit Schneidrollen 4. Der Arbeitstisch besitzt zwei T-förmige Standfüsse 5, an welchen (5) er (1) bei 7 schwenkbar angeordnet ist. Hierbei ist eine Haltestütze 7 zur Tischabstützung in waagrechter Lage aufschwenk- und bei 8 feststellbar. Die Standfüsse 5 sind am unteren Querbalken an beiden Enden 5a mit Fahrrollen 9 ausgerüstet und die hochstehenden T-Balken 5b dienen an ihrem freien Ende bei 6 der Tischanlenkung, wobei seitl. im Abstand zu einem Standfuss 5 die Haltestütze 7 aufschwenk- und unter der Tischplatte 1 festlegbar ist.

Der Arbeitstisch ist halbiert und an seinem Aussenrahmen bei 10 zusammensteckbar und mittels Gelenkstutzen an den Standfüssen bei 6 verschwenkbar und so in senkrechter Tischstellung zum Wegstellen und bei waagrechter Tischlage zum Arbeiten geeignet. Die beiden Standfüsse 9 in T-Form sind mit einer einsteck- ober anflanschbaen Längstraverse 10a fest zu verbinden bzw. zu verschrauben. Die hochgestellten T-Balken 5b sind aussenseitig zur Tischbreite etwa auf 1/3 derselben angeordnet und der Arbeitstisch 1 ist senkrecht oder nahezu senkrecht an diesem (5b) schwenkbar. Die Haltestütze 7 ist bei waagrechter Tischlage andererseits etwa 1/3 der Tischbreite aufschwenkbar.

Die einerseits am Arbeitstisch quer verschiebbar vorgesehenen Schneidrollen 4 laufen als Schneidwagen 3 auf einem Hebelarm 11, welcher am Anlenkende 12 mittels Zugfeder 13 aufschwenkbar gehalten ist und am Verschlussende 14 mittels Exzenterverschluss 15 nach Einbringen des abzuschneidenden Blechbands 2 zum Ablängen verschliessbar ist. Dem Hebelarm 11 in Vierkantausführung ist eine Vierkantauflage 16 für das Blechband 2 zugeordnet und eine Rohrrolle 17 zur Blechzubringung vorgelagert, welche verstell- und feststellbare Seitenanschläge 18 für das Blechband 2 trägt.

Am freien Ende des Vierkanthebelarms 11 ist ein Rohrgriff 19 vorgesehen, dem ein Rohrgriff 20 des Exzenterverschlusses 15 zur Einhandbedienung zugeordnet ist. Entlang der einen Tischkante ist eine Anschlagleiste 21 mit Längenmaß 22 vorgesehen mit aufsitz- bzw. verschieb- und festellbarem Längenanschlag 23 für das abzuschneidende Blechbndende. Der die Schneidrollen 4 tragende Schneidwagen 3 läuft als getrennte Einheit mittels oberen Fahrrollen 24 und beidseitigen Fahrrollen 25 auf Führungsflächen des Hebelarms 11, wie aus der Zeichnung ersichtlich wird.

Hiermit wird eine Schneidvorrichtung mit Tisch zum Abschneiden von Bandmaterial unterschiedlicher Breite geschaffen, welche eine gute Handhabung und leichtes Wegstellen nach dem Gebrauch mit hochgestellter Tischplatte erlaubt und überdies noch eine zerlegbare Tischplatte mit gesonderten Standfüssen und Längstraverse zum Zerlegen für einen weiteren Transport besitzt.

## Patentansprüche

1. Schneidvorrichtung für Blechbänder bestehend aus einem Arbeitstisch (1) mit quer zur Bandeingabe (2) verschiebbar angeordneten Schneidmessern bzw. -Rollen (4), wobei der Arbeitstisch (1) auf wenigstens zwei im Abstand voneinander angeordneten, vorzugsweise mit Fahrrollen (9) versehenen Standfüßen (5) in T-Form - seitlich abschwenkbar angeordnet ist und wenigstens eine Haltestütze (7) an einem Standfuss (5) oder der Tischunterseite zur Tischabstützung in waagrechter Lage aufschwenk- und feststellbar ist, **dadurch gekennzeichnet,** daß den Arbeitstisch (1) halbierbar ist und der halbierbare Arbeitstisch (1) an seinem Aussenrahmen zusammensteckbar und mittels unteren Gelenkstutzen an den Standfüßen (5) verschwenkbar festzulegen ist, während die beiden Standfüße (5) in T-Form mit einer einsteck- oder anflanschbaren Längstraverse (10a) fest verbind- bzw. verschraubbar sind.

2. Schneidvorrichtung nach Anspruch 1,
**dadurch gekennzeichnet,** dass an den Standfüßen (5) in T-Form am unteren Querbalken außen Fahrrollen (9) angeordnet sind, während der hochstehende T-Balken (5b) am freien Ende der Tischanlenkung dient und hierzu im seitlichen Abstand wenigstens an einem Standfuß (5) die Haltestütze (7) aufschwenk- und unter der Tischplatte (1) feststellbar ist.

3. Schneidvorrichtung nach einem der Ansprüche 1 und 2, **dadurch gekennzeichnet,** daß die hochgstellten T-Balken (5b) aussermittig zur Tischbreite - etwa auf 1/3 derselben - angeordnet sind und der Arbeitstisch (1) an diesem senkrecht oder nahezu senkrecht abschwenkbar ist, während die Haltestütze (7) bei waagrechter Tischlage andererseits - eta auf 1/3 der Tischbreite - aufschwenkbar ist.

4. Schneidvorrichtung nach einem der Ansprüche 1 bis 3, **dadurch gekennzeichnet,** daß die einerseits am Arbeitstisch (1) quer verschiebbar vorgesehenen Schneidrollen (4) als Schneidwagen (3) auf einem Hebelarm (11) laufen, welcher am Anlenkende (12) mittels Zugfeder (13) aufgeschwenkt gehalten ist, während er am Verschlußende (14) mittels Exzenterverschluß (15) nach Einbringen des abzuschneidenden Blechbandes zum Ablängen verschließbar ist.

5. Schneidvorrichtung nach Anspruch 4,
**dadurch gekennzeichnet,** daß dem Hebelarm (11) in Vierkantausführung eine Vierkantauflage (16) für das Blechband zugeordnet ist und dieser eine Rohrrolle (17) zur Blechzubringung vorgelagert ist, welche verstell- und feststellbare Seitenanschläge (18) für das Blechband trägt.

6. Schneidvorrichtung nach einem der Ansrpüche 1 bis 5,
**dadurch gekennzeichnet,** daß am freien Ende des Vierkant-Hebelarms (11) ein Rohrgriff (19) angeordnet ist, unter welchem ein Rohrgriff (20) des Exzenterverschlusses (15) zur Einhandbedienung liegt.

7. Schneidvorrichtung nach einem der Ansprüche 1 bis 6, **dadurch gekennzeichnet,** daß entlang der einen Tischlängsachse eine Anschlagleiste (21) mit Längenmaß (22) vorgesehen ist mit aufsitzendem verschieb- und feststellbarem Längenanschlag (23) für das abzuschneidende Blechbandende.

8. Schneidvorrichtung nach einem der vorhergehenden Ansprüche, **dadurch gekennzeichnet,** daß der die Schneidrollen (4) tragende Schneidwagen (3) als getrennte Einheit mittels oberen und beidseitigen Fahrrollen (24;25) auf Führungsflächen des Hebelarms (11) läuft.

## Claims

1. A cutting device for coil sheet metal including a work table (1) comprising slidable cutting knives or rollers (4) positioned diagonally to the coil feed (2), the work table (1) being sidewards tiltable and resting on at least two T-shaped feet (5) being positioned at distance from one another and preferably including drive wheels (9) and at least one support (7) on one root (5) or the table underside, being upwardly movable and securable to support the table in the horizontal position, characterised in that the outer frame of the two-section working table (1) being joinable and movably securable with lower joint connections to the T-shaped feet (5) and both T-shaped feet (5) being connectable or boltable to an insertable or flangable longitudinal cross bar (10a).

2. A cutting device according to claim 1, characterised in that the T-shaped feet (5) on the lower traverse bar including drive wheels (9) at their outer ends and the upwardly facing T-bar (5b) on the free end forming a link with the table and the sidewards positioned support (7) on at least one foot (5) being openable and lockable beneath the table top (1).

3. A cutting device according to claims 1 and 2, characterised in that the upwardly facing T-bar (5b) being positioned off-centre at approx. 1/3 of the table width on which the work table (1) being vertically or near vertically pivotable, whilst the support (7) being pivotable to approx. 1/3 of the table width during horizontal table position.

4. A cutting device according to one of the claims 1 to 3, characterised in that the cutting rollers (4) being provided diagonally movable on one side of the working table (1) run as a cutting carriage (3) along a lever arm (11) being held open at its articulated end (12) by a tension spring (13) whilst being lockable at the locking end (14) by an eccentric lock (15) for cutting sections from the inserted sheet metal coil.

5. A cutting device according to claim 4, characterised in that a square support (16) for the sheet metal being allocated to the lever arm (11) and preceded by a tubular roller (17) feeding the sheet metal coil and accommodating adjustable and fixable side stops (18) for the sheet metal.

6. A cutting device according to claims 1 to 5, characterised in chat a tubular grip (19) being positioned on the free end of the square lever arm (11) with a tubular grip (20) of the eccentric lock (15) being positioned underneath for single-handed operation.

7. A cutting device according to one of the claims 1 to 6, characterised in that a stop rail (21) with length markings (22) is provided along one longitudinal table axis comprising slidable and fastenable length stops (23) for the sheet metal end to be cut.

8. A cutting device according to one of the preceding claims, characterised in that the cutting carriage (3) carrying the cutting rollers (4,) with upper drive rollers (24;25) on both sides, runs as separate unit along the guide surfaces of the lever arm (11).

## Revendications

1. Dispositif de coupe pour feuillards, constitué d'une table de travail comportant, transversalement à l'introduction du feuillard (2), des lames ou des rouleaux (4) de coupe, disposées de manière mobile, ladite table (1) étant disposée de façon à pouvoir être rabattue latéralement, sur au moins deux pieds supports (5) en forme de T, munis de préférence de roulettes (9) et disposés à une certaines distances l'un de l'autre, tandis qu'au moins un renfort de maintien (7) peut être fixé et basculé vers le haut sur l'un des pieds (5) ou sur la face inférieure de la table, en vue de la supporter lorsqu'elle est en position horizontale, caractérisé en ce que ladite table de travail (1) peut être divisée en deux et réassemblée sur son cadre extérieur et fixée de manière à pivoter, au moyen de raccords articulés inférieurs, sur lesdits pieds supports (5), ces deux pieds supports (5) en forme de T pouvant être fixés ou boulonnés à une traverse longitudinale (10a) pouvant être emboitée ou fixée par brides.

2. Dispositif de coupe selon la revendication 1, caractérisé en ce que, sur les pieds (5) en forme de T sont disposés extérieurement, sur la barre transversale inférieure du T, des roulettes (9), tandis que la barre verticale du T (5b) sert, sur son extrémité libre, à guider la table et que, à cet effet, le renfort (7) peut basculer vers le haut et être fixé sous le plateau de table (1), à une certaine distance latérale et au moins sur l'un des pieds (5).

3. Dispositif de coupe selon l'une des revendications 1 ou 2, caractérisé en ce que les barres verticales du T (5b) sont disposées de manière décentrée par rapport à la largeur de la table - environ sur un tiers de celle-ci - et que ladite table (1) peut être rabattue sur ce tiers, verticalement ou presque, tandis que d'autre part, lorsque la table est en position horizontale, le renfort de maintien (7) peut pivoter vers le haut, environ sur un tiers de la largeur de ladite table.

4. Dispositif de coupe selon l'une des revendications 1 à 3, caractérisé en ce que les rouleaux de coupe (4) prévus pour se déplacer transversalement sur un côté de la table (1), roulent en constituant un chariot coupant (3), sur un bras de levier (11) lequel est maintenu, sur son extrémité articulée (12), en position dirigée vers le haut au moyen de ressorts de traction (13), tandis que sur son extrémité de fermeture (14), il est verrouillable au moyen d' un verrou à excentrique (15), après l'introduction du feuillard, afin que soit exécutée l'opération de coupe.

5. Dispositif de coupe selon la revendication 4, caractérisé en ce que au bras de levier (11) est associé un support à quatre pans (16) pour le feuillard, et qu'en amont de ce support est monté, pour l'alimentation du feuillard, un rouleau tubulaire (17) qui comporte des butées latérales (18) pour le feuillard et dont la position peut être réglée et bloquée.

6. Dispositif de coupe selon l'une des revendications 1 à 5, caractérisé en ce que sur l'extrémité libre du bras de levier (11) à quatre pans, est disposée une manette tubulaire (19) sous laquelle est placée une manette tubulaire (20) du verrou à excentrique (15) permettant d'exécuter les manoeuvres d'une seule main.

7. Dispositif de coupe selon l'une des revendications 1 à 6, caractérisé en ce que le long de l'un des axes longitudinaux de la table est prévue une tringle de butée (21) munie d'une échelle de longueur (22) comportant une butée (23) pouvant coulisser et être bloquée pour l'extrémité de feuillard à couper.

8. Dispositif de coupe selon l'une des revendications précédentes, caractérisé en ce que le chariot de coupe (3) supportant les rouleaux de coupe (4) roule sur des faces de guidage du bras de levier (11) au moyen de roulettes (24, 25) placées en haut et bilatéralement.
